# EUROPEAN PATENT APPLICATION

(11) **EP 2 085 912 A1**
(43) Date of publication of application: **05.08.2009**
(21) Application number: 09001294.9
(22) Date of filing: 30.01.2009
(51) Int. Cl.: G06K 17/00, G06K 19/14

(54) **RFID tag and RFID tag producing apparatus**

(30) Priority: 30.01.2008 JP 2008019228
(71) Applicant: Brother Kogyo Kabushiki Kaisha, Nagoya-shi, Aichi-ken 467-8561 (JP)
(72) Inventor: Kato, Tsutomu, Nagoya-shi Aichi, 4678561 (JP); Miwa, Takahiro, Nagoya-shi Aichi, 4678561 (JP)
(74) Representative: Prüfer & Partner GbR European Patent Attorneys

(57) **Abstract**

An RFID label (T) comprises a tape base layer (101b) formed into a tape shape for disposing an RFID circuit element (To) comprising an IC circuit part (180) configured to store information and a loop antenna (62) configured to transmit and receive information, and a transfer layer (101a) on which characters (R) corresponding to the information stored in the IC circuit part (180) of the RFID circuit element (To) are printed. The characters (R) are disposed in a print area (S) on the inner peripheral side of a loop coil of the loop antenna (62) in the planar view of the RFID label (T) and printed on the transfer layer (101a).

## Description

### TECHNICAL FIELD

The present invention relates to an RFID tag having an RFID circuit element comprising an IC circuit part configured to store information and a tag antenna configured to transmit and receive information, and an RFID tag producing apparatus for producing the same.

### BACKGROUND ART

An RFID (Radio Frequency Identification) system, for example, that reads/writes information between a small-sized RFID tag and a reader/writer (reading/writing apparatus) in a non-contact manner is known. For example, an RFID circuit element provided to a label-shaped or card-shaped RFID tag comprises an IC circuit part configured to store predetermined RFID tag information, and an antenna configured to transmit and receive information, connected to the IC circuit part. With such an arrangement, the reader/writer can access (read/write) the RFID tag information on the IC circuit part even if the RFID tag has become dirty or is arranged in a position where it cannot be seen. Such an RFID tag is continually put into practical use in a variety of fields such as asset management, office document control, breast pocket area nametags, and the like.

One such RFID tag producing apparatus configured to produce an RFID tag having the above various usages is the apparatus described in JP, A, 2006-309557, for example. In this prior art, strip tag tape comprising built-in RFID circuit elements at a predetermined interval is fed out from a tag tape roll and affixed to a print-receiving tape on the surface of which print information entered by the operator is printed by printing means (a thermal head), thereby forming tag tape with print. When this tag tape with print is transported on the feeding path, predetermined RFID tag information generated on the apparatus side is transmitted from the apparatus antenna to the antenna of the built-in RFID circuit element and successively written to the IC circuit part connected to the antenna. The tag tape with print is then cut by a cutter at a predetermined length, thereby producing RFID tags (RFID labels).

### DISCLOSURE OF THE INVENTION

### Problems to be Solved by the Invention

In the RFID tag (RFID label) produced by such an RFID tag producing apparatus as described above, a difference sometimes occurs between the thickness of the RFID tag in the disposed area of the RFID circuit element and that of other areas, resulting in the formation of bumps and indentations on the label surface. In JP, A, 2006-309557, because such points have not been taken into consideration, in a case where printing is performed at the disposed area of the RFID circuit element, the possibility exists that the bumps and indentations will decrease the visual quality of the print, thereby reducing the aesthetic appearance.

An object of the present invention is to provide an RFID tag and RFID tag producing apparatus capable of improving the visual quality of the print and enhancing the aesthetic appearance.

To achieve the above-described object, the present invention is an RFID tag comprising: a base layer formed into a tape-shape or sheet-shape for disposing an RFID circuit element comprising an IC circuit part configured to store information, and a loop antenna configured to transmit and receive information; a print-receiving layer on which print corresponding to information stored in the IC circuit part of the RFID circuit element is printable; and the print-receiving layer including a print area printable with a desired print disposed on an inner peripheral side of a loop coil of the loop antenna in a planar view of the RFID tag.

The RFID tag of the present invention forms a layered structure. In this layered structure, the section which includes the RFID circuit element forms a shape wherein the surrounding layers (base layer, print-receiving layer, and the like) curve around in the thickness direction in an amount equivalent to the thickness dimension of the loop antenna and the IC circuit part. As a result, in this section, protrusions, wrinkles, and the like (hereinafter, simply referred to as "protrusions, etc.,") tend to readily occur on the outer appearance of the RFID tag. Particularly, in a case where a loop antenna is provided on the RFID circuit element, protrusions, etc., readily occur along the loop shape (square-frame shape, for example) of the loop coil.

In the present invention, the RFID tag has a positional relationship such that the print area of the print-receiving layer is positioned on the inner peripheral side of the loop coil in the planar view. In consequence, print is printed only in the area corresponding to the inner peripheral side of the loop coil, and not in the area corresponding to the loop coil where protrusions, etc., readily occur as described above. With this arrangement, the poor viewability of print caused by light, i.e., shine and reflection, which occurs when print is printed on sections of protrusions, etc., is avoided, thereby making it possible to reliably realize easy-to-view print. As a result, the visual quality of the print is improved, thereby enhancing the aesthetic appearance.

### BRIEF DESCRIPTION OF THE DRAWING

FIG. 1 is a diagram showing the configuration of an RFID label system to which a tag label producing apparatus according to the first embodiment of the present invention is applied.
FIG. 2 is a diagram showing the outer appearance and configuration of the tag label producing apparatus.
FIG. 3 is a perspective view from the direction of arrow A in FIG. 2 showing the outer appearance and structure of the cartridge holder inside the apparatus main body and the cartridge mounted thereto, with the upper lid open.
FIG. 4 is a diagram that schematically shows the configuration of the main parts of the cartridge holder of the apparatus main body, and the cartridge loaded thereto.
FIG. 5 is a functional block diagram which shows the functional configuration of an RFID circuit element.
FIG. 6 is a functional block diagram illustrating the functional configuration of a control system of the tag label producing apparatus.
FIG. 7 is a planar view showing an example of the tag tape structure in the tape longitudinal direction and tape width direction, and a diagram showing the transfer layer, tag base layer, and adhesive layer separated from a part of the tag tape so as to expose the inner RFID circuit element.
FIG. 8 is a cross-sectional view showing the structure of the tag tape in the thickness direction, where FIG. 8A is a cross-sectional view of a section along IIIa-VIIIa of the tag tape of FIG. 7B, FIG. 8B is similarly a cross-sectional view of a section along VIIIb-VIIIb, and FIG. 8C is similarly a cross-sectional view of a section along VIIIc-VIIIc.
FIG. 9 is a diagram showing a display example of the display screen of the terminal apparatus during tag label production.
FIG. 10 is a diagram showing an example of the structure the RFID label, where FIG. 10A is a planar view, FIG. 10B is a cross-sectional view of the cross-section along Xb-Xb in FIG. 10A, and FIG. 10C is a cross-sectional view of the cross-section along Xc-Xc in FIG. 10A.
FIG. 11 is a flowchart showing the RFID label production processing procedure executed by the control part of the tag label producing apparatus.
FIG. 12 is a diagram illustrating the configuration of the cartridge holder mounted to the RFID tag producing apparatus of a modification that produces laminated-type RFID tags, and the main parts of the cartridge mounted therein.
FIG. 13 is a diagram showing an example of the structure of the RFID label of the modification, where FIG. 13A is a planar view, FIG. 13B is a cross-sectional view of the cross-section along XIIIb-XIIIb in FIG. 13A, and FIG. 10C is a cross-sectional view of the cross-section along XIIIc-XIIIc in FIG. 10A.

### BEST MODE FOR CARRYING OUT THE INVENTION

The following describes an embodiment of the present invention with reference to accompanying drawings.

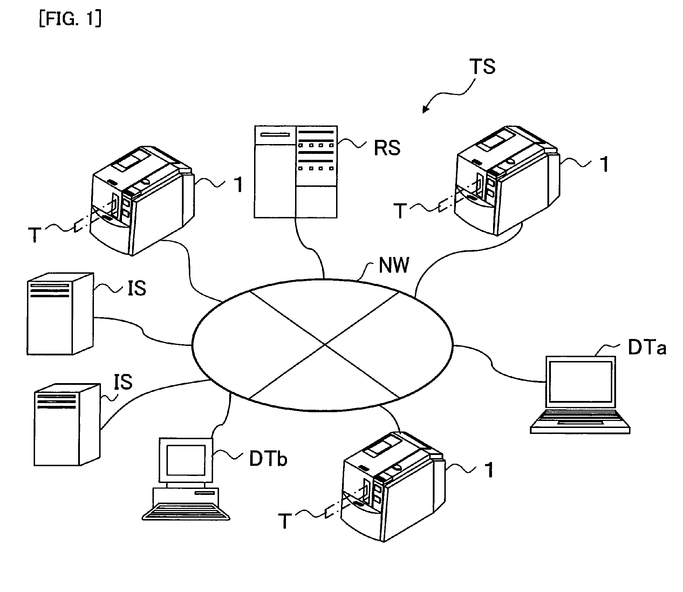

In an RFID label system TS shown in Fig. 1, a tag label producing apparatus 1 in the present embodiment comprises a route server RS, an information server IS, a terminal apparatus DTa, a general-purpose computer DTb, etc., via a communication network NW comprising a suitable communication line, etc.

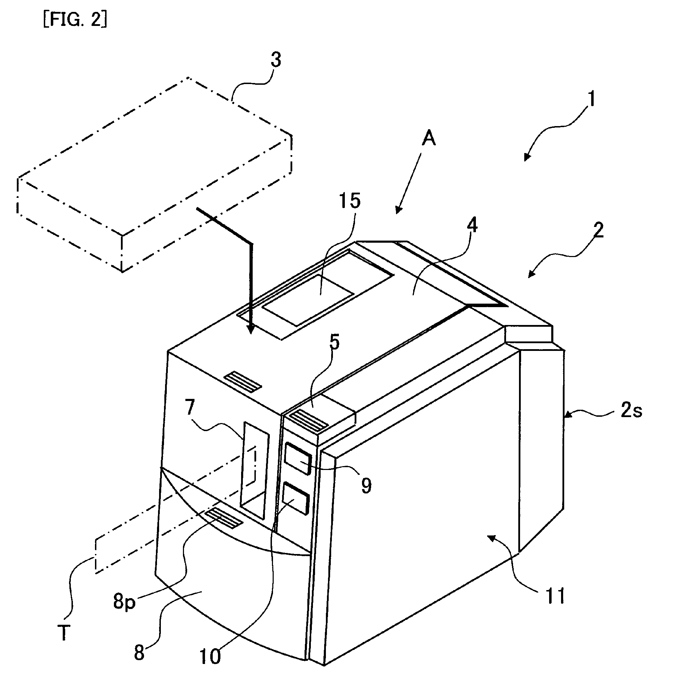

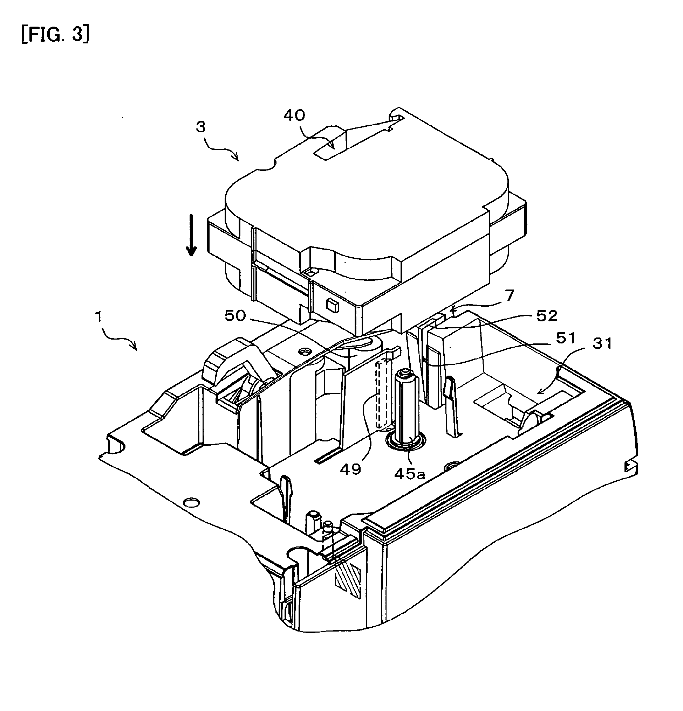

As shown in FIG. 2, the tag label producing apparatus 1 comprises an apparatus main body 2, and a cartridge 3 mounted to a cartridge holder 31 (refer to FIG. 3 described later) of the apparatus main body 2.

The apparatus main body 2 comprises a housing 2s of an overall rectangular shape as an outer shell (comprising an upper surface part, a lower surface part, a front surface part, a rear surface part, and both left and right side surface parts). On the upper surface part are provided an upper lid 4 and an upper lid operation button 5. On the front surface part are provided a label discharging exit 7, a front lid 8, a power button 9, and a cutter driving button 10.

The upper lid 4 is rotatably supported at the end part of the right back side in FIG. 2 of the apparatus main body 2, is biased in the opening direction by a biasing member (not shown), and is lockable with the apparatus main body 2. When the cartridge 3 is removed or installed, the lock is released by pressing the lid operation button 5, the upper lid 4 then opens by the biasing action of the biasing member, and the cartridge 3 is subsequently removed or installed in that state (refer to FIG. 3). Furthermore, on the upper lid 4 is provided an inspection window 15 fit with a transparent cover, etc.

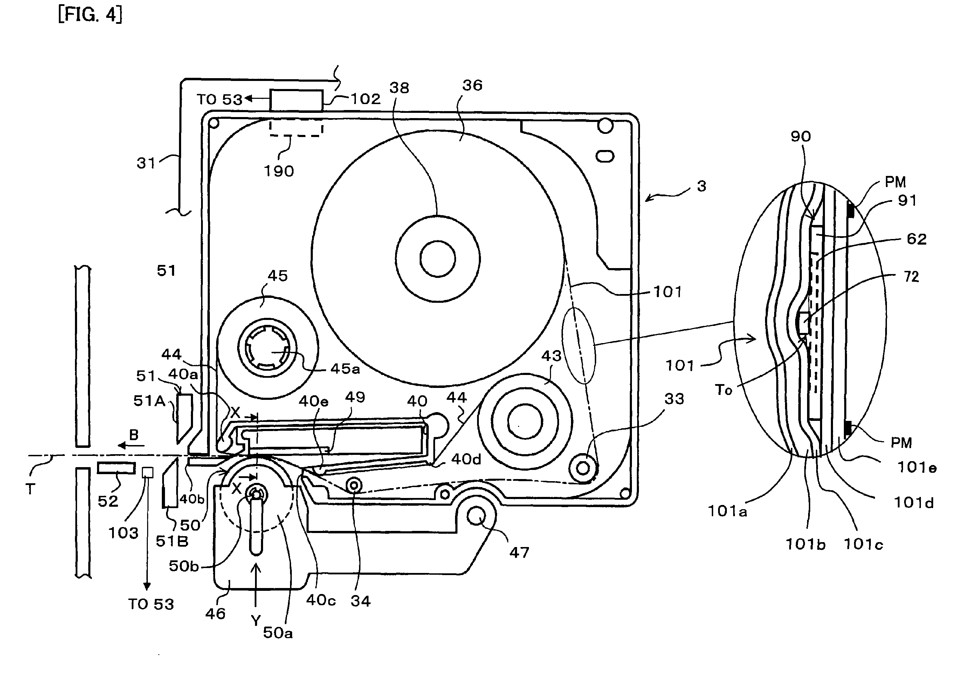

The label discharge opening 7 discharges to the exterior RFID labels T produced inside the apparatus main body 2. The front lid 8 can be opened and closed when rotated using the lower end as the fulcrum point, and rotates forward and opens when a pressing part 8p provided on the upper end part is pressed upward. The power button 9 is used to turn on and off the main power source of the tag label producing apparatus 1. The cutter driving button 10 is used by the operator to manually operate a cutter 51 described later (refer to FIG. 4) and set the RFID label T to a desired length.

As shown in FIG. 3, when looking downward from the back toward the front in FIG. 2 and in the direction toward the interior of the apparatus main body 2 (with the upper lid 4, which is an upward opened state, not shown to avoid illustration complications), the cartridge 3 appears in this example as a box formed into a rectangular solid shape, and a head insertion opening 40 which passes through both the front and back surfaces is formed in a section thereof. Further, the cartridge holder 31 of the apparatus main body 2 side is formed into a concave shape into which the cartridge 3 can be loaded and housed. On this cartridge holder 31 are provided a ribbon take-up roller driving shaft 45a, a print head 49, a platen roller 50, the cutter 51, and an apparatus antenna 52. When the cartridge 3 is loaded to the cartridge holder 31, the print head 49 is inserted through the head insertion opening 40, and the ribbon take-up roller driving shaft 45a is inserted from the lower surface of the cartridge 3 so as to concentrically fit into a spline shaft hole of a ribbon take-up roller 45 described later (refer to FIG. 4).

The cartridge 3, as shown in FIG. 4, comprises a tag tape roll 36 (actually spiral in shape, but simply shown in a concentric shape in the figure). This tag tape roll 36 is a roll that results when a tag tape 101 wherein a plurality of antenna bases 19 sequentially provided at a predetermined interval in the longitudinal direction is wrapped around a tag tape reel part 38.

The tag tape 101 comprises a five-layer structure (excluding the above-described antenna base 90) in this example (refer to the enlarged view in FIG. 4). That is, the tag tape 101 is designed with layers comprised of a transfer layer 101a, a tape-shaped tag tape base layer 101b, an adhesive layer 101c made of a suitable adhesive, an adhesive layer 101d made of a suitable adhesive, and a separation sheet 101e made of paper, for example, which are layered from the side wrapped on the inside of the tag tape roll 36 (the left side in FIG. 4) to the opposite side (the right side in FIG. 4; the affixing side). The transfer layer 101a is made of a transfer-receiving material on which printing is performed by the heat transfer of ink of an ink ribbon when an ink ribbon 44 described later is placed thereupon. The tag tape base layer 101b is formed of a colored PET (polyethylene terephthalate), for example.

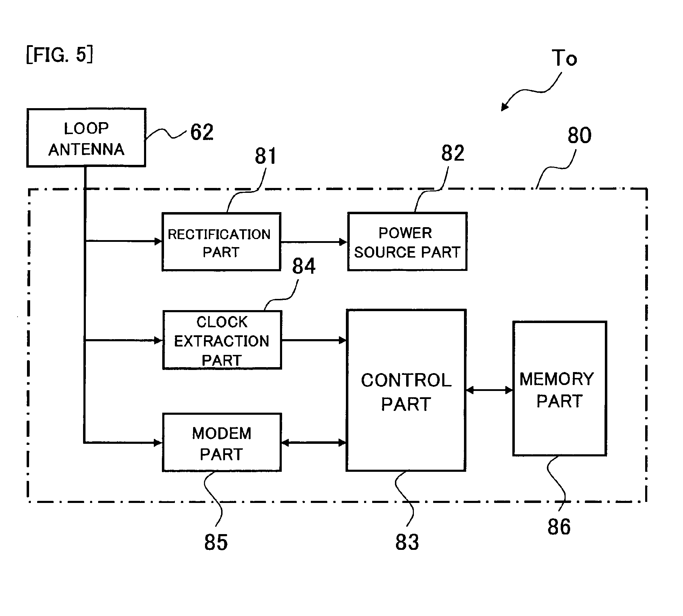

Then, the antenna base 90 is provided between the adhesive layer 101c and the adhesive layer 101d at a predetermined interval position in the longitudinal direction of the tag tape 101. On each antenna base 90 are provided an RFID circuit element To comprising a loop antenna 62 made of a loop coil and configured to transmit and receive information and an IC circuit part 80 (refer to FIG. 5 described later) configured to store information, and a holding member 72 configured to cover and protect the IC circuit part 80 of the RFID circuit element To and the surrounding area.

The antenna base 90 comprises a base material 91, which is a thin sheet of a rectangular shape formed of resin, for example. The loop antenna 62 is embedded in the front surface of the outside of the base material 91 (the inner peripheral side of the tag tape roll 36; the left side in FIG. 4) so that it is exposed, and the holding member 72 of a rectangular solid shape is connected to the exposed surface of the loop antenna 62. With this arrangement, the antenna base 90 comprising the base material 91, the loop antenna 62, and the holding member 72 generally has the overall shape of a sheet, with the holding member 72 (in other words, the IC circuit part 80) of a rectangular solid shape and the loop antenna 62 protruding toward the outer surface of the thin sheet-shaped base material 91. The holding member 72 will be described in detail later.

Then, in the interior of the tag tape 101 is formed a structure wherein the adhesive layer 101c, the tag tape base layer 101b, and the transfer layer 101a which cover the base material 91, the loop antenna 62, and the holding member 72, are bonded to the adhesive layer 101d, with one side (the right side in the enlarged view of FIG. 4) of the antenna base 90 in contact with the surface of the adhesive layer 101d. As a result, the adhesive layer 101c, the tag tape base layer 101b, and the transfer layer 101a are each bonded while curved in alignment with the protruding shape of the base material 91, the holding member 72, and the loop antenna 62. (Note that in FIG. 4, etc., the curved shape is exaggerated to clearly show the structure.) Then, the tag tape roll 36 is wound around the tag tape reel part 38 so that the front surface of the protruding side of the loop antenna 62 and the holding member 72 of the antenna base 90 appears on the roll radial inner side (roll inner peripheral side; that is, so that the separation sheet 101e side appears on the roll outer peripheral side). Furthermore, conversely, the positional relationship with the holding member 72, the loop antenna 62, and the antenna base 90 may be reversed so that the front surface of the protruding side of the loop antenna 62 and the holding member 72 of the antenna base 90 appears on the roll radial outer side (roll outer peripheral side).

On the cartridge 3 are provided an ink ribbon roll 43, the ink ribbon 44 fed out from the ink ribbon roll 43, and the ribbon take-up roller 45 configured to take up the ink ribbon 44 (the ribbon take-up roller driving shaft 45a is fit in the spline shaft hole formed at the shaft center thereof and driven thereby). The ribbon take-up roller driving shaft 45a is driven and controlled by a roller driving circuit (not shown).

A separation member 40a is formed on the tape feeding direction downstream side (on the left side in FIG. 4) of the print head 49 at the head insertion opening 40. When characters and the like are printed by the print head 49, this separation member 40a, as described later, switches the feeding direction of the ink ribbon 44 that is positioned between the platen roller 50 and the print head 49 and pressed against the tag tape 101, and performs an action that separates the ink ribbon 44 from the tag tape 101.

On the cartridge 3 is formed a discharging exit 40b configured to discharge to the outside of the cartridge 3 the tag tape 101 on which characters, etc., have been printed, after separation of the ink ribbon 44 via the separation member 40a.

A plurality of the cartridges 3 of different types is mountably provided on the cartridge holder 31. The cartridge 3 differs by type in, for example, the width direction dimension of the tag tape 101, the length direction dimension of the RFID circuit element To, the disposed pitch of the RFID circuit element To, the center line position, and the like.

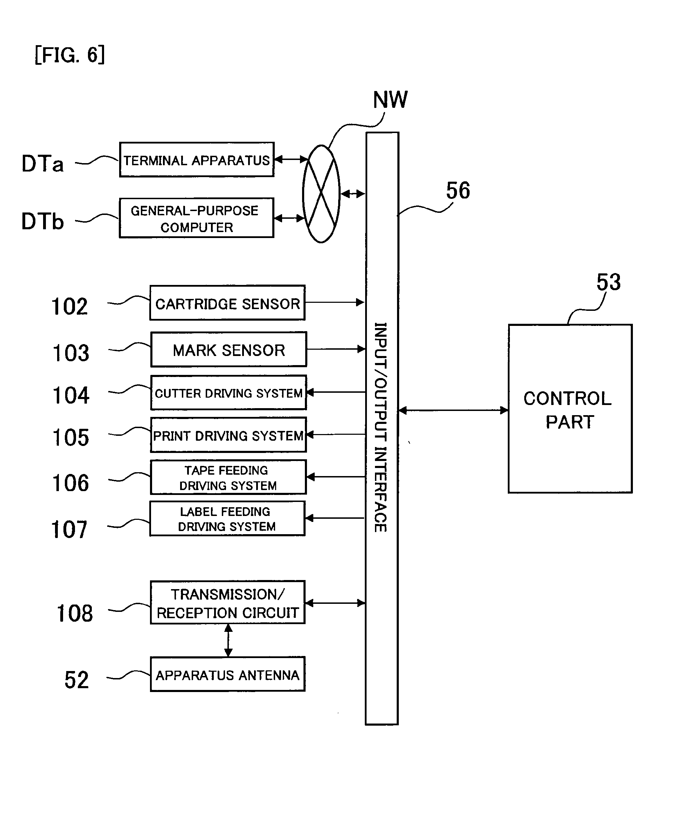

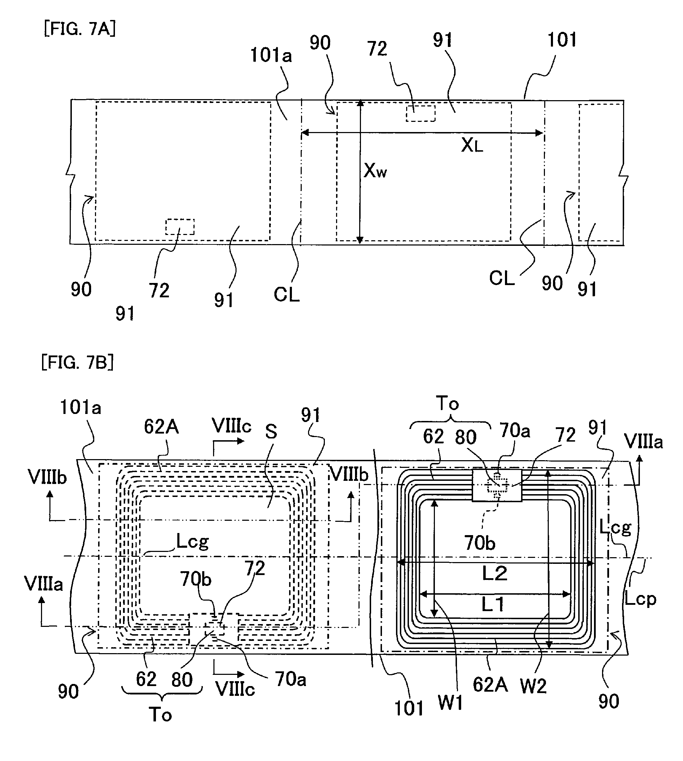

A cartridge sensor 102 capable of detecting the type of the cartridge 3 by detecting a detection-receiving part 190 of the cartridge 3 is provided in a position corresponding to the cartridge holder 31. The detection signal of this cartridge sensor 102 is inputted to a control part 53 (refer to FIG. 6 described later), thereby making it possible to detect tape attributes such as the type of the above-described cartridge 3 or, in other words, the width direction dimension of the tag tape 101 of the cartridge 3, the width direction dimension and the length direction dimension of the RFID circuit element To (particularly, a tape width direction dimension W1 and a tape length direction dimension L1 of the inner peripheral part of an antenna pattern 62A positioned on the innermost peripheral side; refer to FIG. 7b, etc., described later), the disposed pitch of the RFID circuit element To, the center line position, and the like.

A part of the cartridge 3 is visible from the outside through the above-described inspection window 15, when loaded to the cartridge holder 31. Specifically, on the front surface of the cartridge 3 is provided, for example, a tape type display part (not shown) that displays the tape type, such as the tape width and color, of the tag tape 101. This tape type display part is visible from the outside through the inspection window 15 with the cartridge 3 loaded to the cartridge holder 31.

The print head 49 formed in the shape of a flat plate is a thermal head comprising a plurality of heating elements disposed in a line, for example. This print head 49 is substantially made of a ceramic having a high degree of hardness, and the head surface in which the heating elements are arranged is substantially formed into a flat surface. Then, the dimension in the tape width direction (the direction orthogonal to the feeding direction on the front surface of the tag tape 101) of the print head 49 is formed so that it is wider than the tape width of the tag tape 101 of the various types fed from the cartridge 3, for example.

During printing, the ink ribbon 44 and the tag tape 101 are layered and pressed against the head surface (the front surface of the transfer layer 101a side of the tag tape 101 contacts the head surface via the ink ribbon 44). At this time, the heating elements are driven by a print-head driving circuit (not shown) so as to perform printing on the front surface of the transfer layer 101a of the tag tape 101.

The above-described platen roller 50 for activating a pressing force against the front surface of the separation sheet 101e side of the tag tape 101 and feeding the tape is provided in the position opposite the print head 49. This platen roller 50 comprises a roller main body 50a, and a driving shaft 50b provided at the rotational center of the roller main body 50a. The roller main body 50a is formed from a material having a relatively low level of hardness (that is, a material that is flexible and capable of elastic deformation) such as rubber, for example, and has a sufficient thickness dimension in the radial direction from the outer peripheral front surface.

On the cartridge holder 31, a platen holder 46 is rotatably supported around a holder shaft 47, and the driving shaft 50b of the platen roller 50 is rotatably supported at the free end of the platen holder 46. The platen holder 46 is normally biased in the counterclockwise direction in FIG. 4 around the holder shaft 47 by an elastic member (not shown). When printing is performed on the tag tape 101, the platen holder 46 is rotationally driven in the clockwise direction (or the counter-clockwise direction) in FIG. 4 by a motor (not shown), thereby enabling the platen roller 50 to control the contact with and release from the print head 49. The platen roller 50 is also rotationally driven and controlled by a roller driving circuit (not shown) via the driving shaft 50b (that is, interlocked with the ribbon take-up roller 45).

Further, the cutter 51 (a scissor-type cutter in this example) is arranged on the cartridge holder 31, adjacent to the discharging exit 40b of the cartridge 3. This cutter 51 comprises a fixed blade 51 A and a movable blade 51B. That is, the cutter 51 is connected to a solenoid (not shown). This solenoid is energized by a solenoid driving circuit (not shown), thereby operating the movable blade 51B with respect to the fixed blade 51A. With this arrangement, the tag tape 101 with print is cut at a predetermined length so as to form the RFID label T.

An apparatus antenna 52 is provided on the tape feeding direction downstream side (left side in FIG. 4) of the cutter 51. The apparatus antenna 52 performs the communication for information reading/writing with the RFID circuit element To disposed in the tag tape 101. A mark sensor 103 (described in detail later) is provided between the cutter 51 and the apparatus antenna 52.

The RFID circuit element To, as shown in FIG. 5, has the apparatus antenna 52 of the tag label producing apparatus 1 as described above, the tag antenna 62 (in this example, loop antenna) configured to transmit and receive signals in a non-contact manner, and the IC circuit part 80 connected to the loop antenna 62.

The IC circuit part 80 comprises a rectification part 81 configured to rectify the interrogation wave received via the loop antenna 62, a power source part 82 configured to store the energy of the interrogation wave thus rectified by the rectification part 81 as a driving power source, a clock extraction part 84 configured to extract a clock signal from the interrogation wave thus received from the loop antenna 62 and supply the clock signal thus extracted to a control part 83, a memory part 86 configured to store a predetermined information signal, a modem part 85 connected to the loop antenna 62, and the control part 83 for controlling the operation of the RFID circuit element To via the memory part 86, the clock extraction part 84, the modem part 85, etc.

The modem part 85 demodulates communication signals from the apparatus antenna 52 of the tag label producing apparatus 1 received from the loop antenna 62, modulates a reply signal from the control part 83, and replies with a response wave (signal including a tag ID) from the loop antenna 62.

The clock extraction part 84 extracts the clock component from the received signal and extracts the clock to the control part 83, supplying the clock corresponding to the frequency of the clock component of the received signal to the control part 83.

The control part 83 executes basic control, such as interpreting a received signal demodulated by the modem part 85, generating a reply signal based on the information signal stored in the memory part 86, and returning the reply signal from the loop antenna 62 via the modem part 85.

Subsequently, the control system of the tag label producing apparatus 1 will be described with reference to FIG. 6.

As shown in FIG. 6, the tag label producing apparatus 1 is provided with the control part 53 comprising a microprocessor, etc., for example. The control part 53 is connected to the communication line NW which is connected to the aforementioned terminal apparatus DTa, and the general-purpose computer DTb via the input/output interface 56.

Each driving system, such as a tape feeding driving system 106 that includes a platen roller driving circuit of the cartridge holder 31, a label feeding driving system 107 that includes a transport roller driving circuit, a print-head driving system 105 that includes the print-head driving circuit, and a cutter driving system 104 that includes the solenoid driving circuit, and a transmission/reception circuit 108 that is connected to the mark sensor 103, the cartridge sensor 102, and the antenna 52 (may be commonly used with at least a portion thereof or used individually) are connected to an input/output interface 56.

A configuration example of the tag tape 101 is shown in FIG. 7A and FIG. 7B. As shown in FIG. 7A and FIG. 7B, the tag tape 101 comprises a plurality of antenna bases 90, separated at a predetermined interval in the longitudinal direction. Each RFID circuit element To comprises the IC circuit part 80 and the loop antenna 62 as described above. In this example, the antenna pattern 62A of the loop antenna 62 is buried in the base material 91 formed in sheet shape using a suitable synthetic resin material, and the holding member 72 that includes the IC circuit part 80 is provided so as to be connected to the front surface of the antenna pattern 62A. Furthermore, as shown in FIG. 7A, the cutting position CL for cutting the RFID label T produced from the tag tape 101 one by one from the tag tape 101 is established between the antenna bases 90 disposed in the longitudinal direction.

The holding member 72 covers and protects the IC circuit part 80 provided in the RFID circuit element To. (For example, the holding member 72 is formed from a suitable resin material, and the IC circuit part 80 is mold formed.) The IC circuit part 80, in this example, is provided on the lower surface side (loop antenna 62 side) of the holding member 72. A connection land comprising the above-described connection points 70a and 70b is positioned on the lower surface side of the holding member 72, and the antenna pattern 62A on one side (the radial outer side in this example) of the loop antenna 62 and the antenna pattern 62A on the other side (the radial inner side in this example) of the loop antenna 62 are electrically connected with the IC circuit part 80 via the respectively corresponding connection points 70a and 70b so as to conduct electricity.

On the other hand, the base plate 91 and the loop antenna 62, which comprise the antenna base 90 are provided substantially across the entire tape width direction of the tag tape 101, and the antenna pattern 62A of the loop antenna 62 is wired so as to circle around in a rectangular frame shape in the planar view.

At this time, each of the antenna bases 90 is also provided substantially across the entire tape width direction of the tag tape 101. Particularly, a tape width direction dimension W2 (refer to FIG. 7B) of the outer peripheral area of the antenna pattern 62A of the outermost peripheral side of the loop antenna 52, and a tape length direction dimension XW (refer to FIG. 7A) of the tag tape 101 (in other words, of the RFID tag T) match with a deviation of within 5% of the dimension XW (0.95XW ≤ W2 ≤ XW). Further, a tape longitudinal direction dimension L2 (refer to FIG. 7B) of the outer peripheral area of the antenna pattern 62A of the outermost peripheral side of the loop antenna 52, and the tape length direction dimension XL (= the distance between two cutting positions CL and CL; refer to FIG. 7A) of the RFID tag T match with a deviation of within 5% of the dimension XL (0.95XL ≤ L2 ≤ XL).

In this example, each RFID circuit element To is arranged so that an RFID circuit element To wherein the holding member 72 which includes the IC circuit part 80 is disposed near the end part (upper side in the example shown) of one side of the tape width direction of the tag tape 101, and an RFID circuit element To wherein the holding member 72 which includes the IC circuit part 80 is disposed near the end part of the other side (the lower side in the example shown) of the tape width direction of the tag tape 101 are provided alternately in a zigzag alignment. With this arrangement, the tag tape 101 can be formed into a relatively uniform shape, suppressing any abnormal shape wherein either one side or the other side in the tape width direction bulges upward. Further, each of the antenna bases 90 (in other words, each of the RFID circuit element To) is disposed so that each center line Lcg thereof in the tape width direction is substantially aligned on the same straight line. Particularly, in this example, each center line Lcg is disposed so that it substantially aligns with a tape width direction center line Lcp of the tag tape 101. Furthermore, the RFID circuit element To arrangement is not limited to a zigzag alignment; rather, simply the RFID circuit elements To disposed in one of the directions may be continually provided on the tag tape 101.

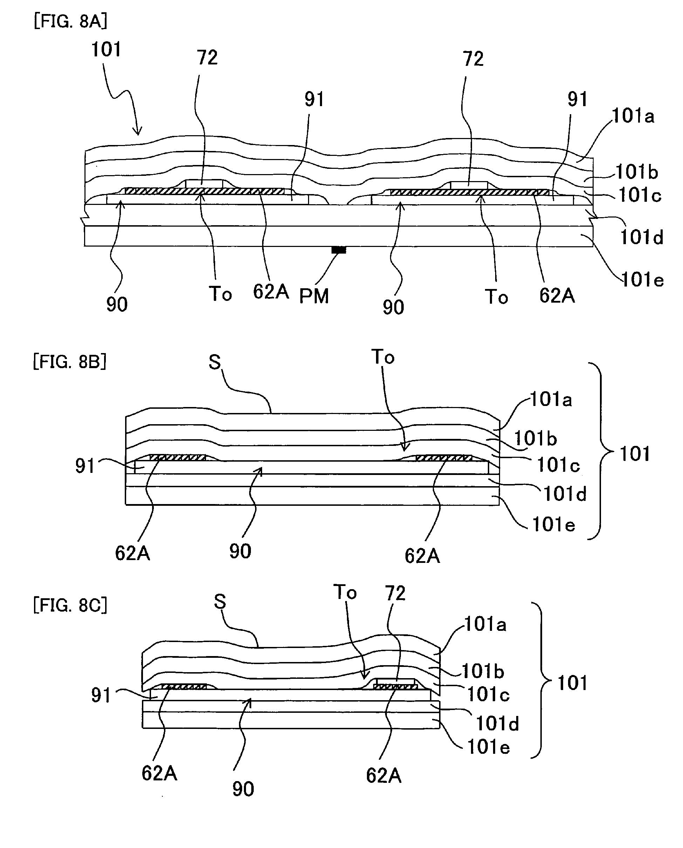

As shown in FIGS. 8A to 8C and the aforementioned FIGS. 7A and 7B, the tag tape 101, excluding the antenna base 90, has a five-layer structure comprising the transfer layer 101a, the tag tape base layer 101b, the adhesive layer 101c, the adhesive layer 101d, and the separation sheet 101e. The five layers of the tag tape 101 are layered in that order from the front surface side (the upper side in FIG. 8) to the side corresponding to the opposite side (the lower side in FIG. 8; the side affixed to the object to be affixed). The antenna base 90 is fixed between the adhesive layer 101c and the adhesive layer 101d. The adhesive layer 101d is used to affix the RFID label T to a target article, etc. The separation sheet 101e protects the adhesive surface until the adhesive layer 101d is used for affixing.

Within the layered structure of the tag tape 101, the section that includes the RFID circuit element To is formed so that the surrounding tag tape base layer 101b, transfer layer 101a, and the like curve around in the thickness direction in an amount equivalent to the thickness dimension of the loop antenna 62, the IC circuit part 80, etc. Particularly, the section of the tag tape 101 that includes the loop antenna 62 rolls upward in the thickness direction along the square frame shaped antenna pattern 62A in the planar view, bulging upward to a significant degree in the tape thickness direction as a whole.

On the other hand, the section on the inner peripheral side of the loop antenna 62 of the tag tape 101, as shown in FIG. 8B and FIG. 8C, has a flat layered structure in which the tag tape base layer 101b, the transfer layer 101a, and the like do not protrude upward. As a result, on the transfer layer 101a of the front surface of the tag tape 101, a flat region of a square shape in the planar view is formed on the radial inner peripheral side section of the loop antenna 62. The most significant feature of this embodiment is the establishment of this square-shaped flat section as a print area S of the tag tape 101 and the execution of desired printing thereupon (described in detail later).

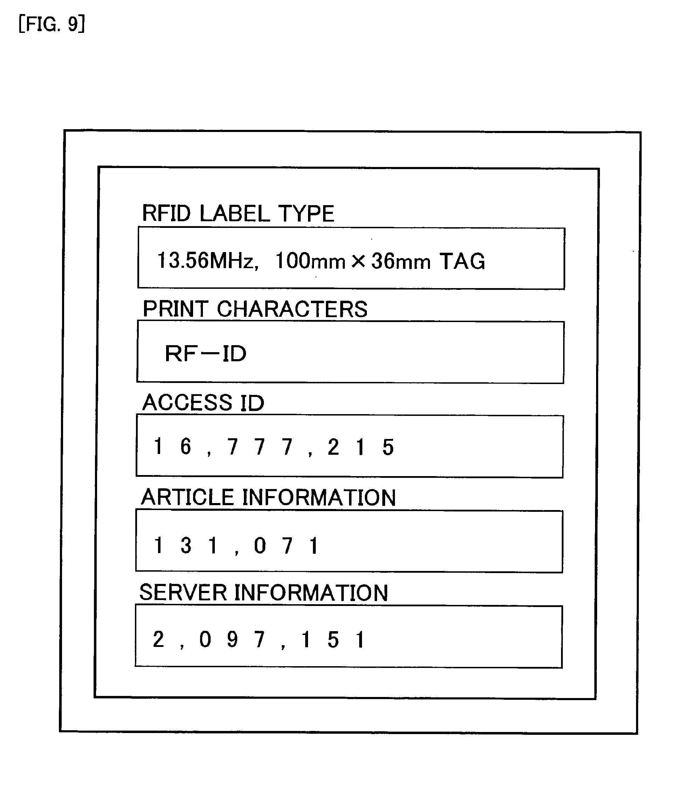

When the above-described RFID label T is produced, a display such as shown in FIG. 9 is designed as the display screen of the terminal apparatus DTa. In this example, the display includes information such as the type of RFID label T (access frequency and label dimensions), the print characters printed by the print head 49, the access ID which is identification information unique to the RFID circuit element To of the RFID label T, the address of the article information stored in the information server IS of FIG. 1, and the storage destination address of the corresponding information in the route server RS of FIG. 1.

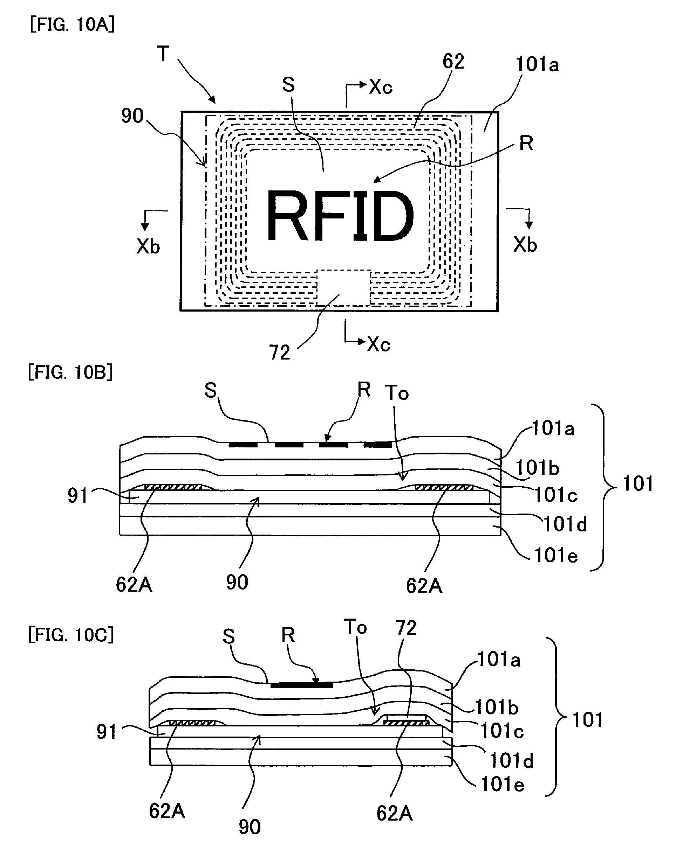

The RFID label T produced from the tag tape 101, as shown in FIG. 10A to FIG. 10C, is formed after cutting the tag tape 101 of the five-layer structure (six layer structure when the antenna base 90 is included) at a predetermined length. Then, the antenna base 90 is disposed substantially across the entire tape width direction of the tag tape 101 as described above, in the interior of the tag tape 101. Then, the print characters R (characters "RFID" in the example shown) are printed in the print area S positioned in the flat region on the inner peripheral side of the loop antenna 62 on the transfer layer 101a of the tag tape 101.

The operation and action of the tag label producing apparatus 1 that employs this tag tape 101 will now be described step by step.

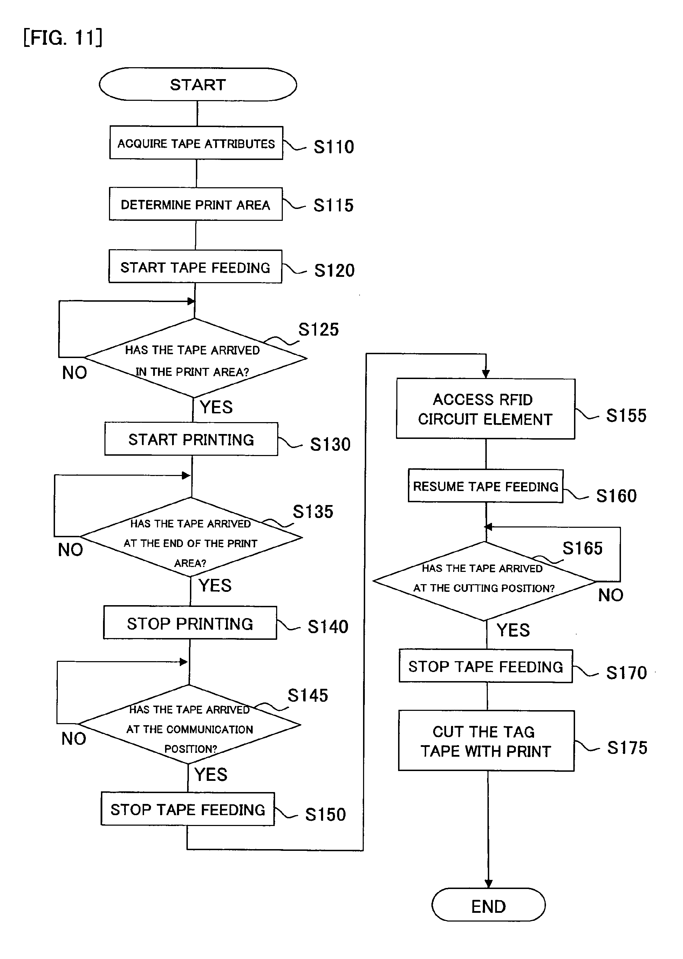

First, the tag label production processing procedure will be described with reference to FIG. 4 and FIG. 11.

In the aforementioned FIG. 4, with the cartridge 3 loaded to the cartridge holder 31, the tag tape 101 fed out from the tag tape roll 36 passes between the print head 49 and the platen roller 50 via an opening 40c of the cartridge 3 while guided by two guide rollers 33 and 34. Further, the ink ribbon 44 fed out from the ink ribbon roll 43 is layered on top of the tag tape 101 via the opening 40c while guided and controlled by controlling projection parts 40d and 40e of the cartridge 3, and then passes in that state between the print head 49 and the platen roller 50. Then, when the power button 9 is pressed so as to turn on the main power supply and an RFID label production operation is entered using the terminal apparatus DTa, for example, a corresponding instruction signal is inputted to the control part 53 via the input/output interface 56, and RFID label production is started by the control of the control part 53.

As shown in FIG. 11, first, in step S110, the control part 53 acquires the tape attribute information of the tag tape 101 in the cartridge 3 using a detection signal that detects a detection-receiving part 190 of the cartridge 3 by the cartridge sensor 102. The tape attribute information, as described above, includes the width direction dimension of the tag tape 101 of the cartridge 3, the width direction dimension and the length dimension (the tag size information) of the RFID circuit element To, the disposed pitch and center position (tag arrangement information) of the RFID circuit element To, and the like.

Furthermore, the tape attribute information may be acquired by providing an antenna (common to or separate from the apparatus antenna 52) on the apparatus main body 2 side of the tag label producing apparatus 1, and performing wireless communication with the RFID circuit element To of the tag tape 101 within with cartridge 3. Or, the tape attribute information may be acquired by providing an RFID circuit element To equivalent to the above that stores the tape attribute information in the housing, etc., of the cartridge 3 and performing wireless communication with that RFID circuit element To. Or, an operator may input the tape attribute information of the corresponding cartridge 3 manually from operation means, the terminal apparatus DTA, or the like provided in the label producing apparatus 1.

Subsequently, in step S115, the control part 53 determines the print area S of the tag tape 101 based on the incorporated tape attribute information. The print area S is set on the transfer layer 101a of the tag tape 101 so as to avoid the position of the antenna pattern 62A of the loop antenna 62. In the embodiment, as described above, the square-shaped flat region in the planar view of the inner peripheral side of the antenna pattern 62A of the loop antenna 62 of the transfer layer 101 a is established as the print area S.

Then, in the step S120, the platen holder 46 is rotationally driven in the clockwise direction in FIG. 4 so as to hold the tag tape 101 and the ink ribbon 41 using the platen roller 50 and press the platen roller 50 against the print head 49. With this, the platen roller 50 is rotationally driven by the roller driving circuit (not shown) so that the tag tape 101 and the ink ribbon 44 are pressed against each other by the platen roller 50, feeding the tag tape 101 and the ink ribbon 44 toward the downstream side (the left side in FIG. 4).

Subsequently, in step S 125, the decision is made as to whether or not the starting end (downstream end part in the feeding direction) of the print area S of the tag tape 101 set as described above in the step S115 has reached the position opposite the print head 49. This decision is made by whether or not it has been detected that the tag tape 101 has been fed a predetermined amount that positions the tape feeding direction end part of the print area S opposite the print head 49. The fed amount can be detected by detecting the identification mark PM provided on the tag tape 101 using the mark sensor 103, for example. Or, the fed distance of the tag tape 101 from a certain reference position (a feeding direction position where the identification mark PM is detected, or a subsequent position after the tag tape 101 is fed a predetermined amount) may be detected using a predetermined known method. Detection of the above-described distance may be achieved using a method such as counting the number of output pulses of the platen roller driving circuit that drives the platen roller motor 50, which is a stepping motor. When the determination at step S 125 is YES, the flow goes to step S130.

In step S130, the print head (thermal element) 49 is driven by the print-head driving circuit (not shown) while the pressing and feeding performed by the platen roller 50 continues, thereby thermally transferring the ink of the ink ribbon 44 of the transfer layer 101a of the front surface of the print head 49 side (ink ribbon 44 side) of the tag tape 101 and performing printing. By this printing process, the print characters R based on the data inputted using the terminal apparatus DTa are printed in the print area S of the inner peripheral side of the antenna pattern 62A of the loop antenna 62 of the transfer layer 101a. After printing, the ink ribbon 44 fed out to the downstream side of the print head 49 is separated from the tag tape 101 via the separation member 40a, and wound up by the ribbon take-up roller 45.

Then, in step S135, the decision is made as to whether or not the finishing end (upstream end part in the feeding direction) of the print area S of the tag tape 101 set as described above in the step S115 has reached the position opposite the print head 49 (= whether or not the print area S has ended). This decision can be made by detecting whether or not the tag tape 101 has been fed (using a method based on step S125) a predetermined amount so that the tape feeding direction rear end part of the print area S passes through a position opposite the print head 49, after the determination of print area arrival at the step S125 is YES. When the determination at step S 13 5 is YES, the flow goes to step S 140.

In step S140, the driving of the print head (thermal element) 49 by the print-head driving circuit (not shown) is stopped so as to stop and end the printing on the tag tape 101 by the print head 49. By this printing process, the print characters R based on the data entered using the terminal apparatus DTa are printed in the print area S. The tag tape 101 with print fed out to the downstream side of the print head 49 is separated from the ink ribbon 44, discharged to outside the cartridge 3 from the discharging exit 40b, passed through the cutter 51, and fed out in the direction of arrow B in FIG. 4 toward the apparatus antenna 52.

Subsequently, in step S 145, the decision is made as to whether or not the RFID circuit element To of the tag tape 101 has arrived in the communication position substantially opposite the apparatus antenna 52 (the position directly above the apparatus antenna 52 or a nearby position such as within the communication range). This decision can be also made by detecting whether or not the tag tape 101 has been fed (using a method based on step S125) a predetermined amount so that the RFID circuit element To is substantially opposite the apparatus antenna 52, after the determination of print area end at step S135 is YES. When the determination at step S 145 is YES, the flow goes to step S 150.

In step S150, the rotational driving of the platen roller 50 by the roller driving circuit is stopped so as to stop the feeding of the tag tape 101.

Then, in step S155, information for reading or writing information with the RFID circuit element To of the tag tape 101 via the apparatus antenna 52 is transmitted/received (accessed). When information writing is performed, corresponding information is written based on the data entered using the terminal apparatus DTa of FIG. 1, for example, and when information reading is performed, the read information is displayed on the terminal apparatus DTa, for example. When the transmission/reception of information to/from the RFID circuit element To is completed, the flow goes to step S160.

In step S160, the platen roller 50 is rotationally driven by the roller driving circuit (not shown), thereby resuming the downstream feeding of the tag tape 101 and ink ribbon 44 by the platen roller 50.

Subsequently, in step S165, the decision is made as to whether or not the cutting position CL (refer to FIG. 7A) of the tag tape 101 has arrived at the position opposite the cutter 51. This cutting position decision as well, similar to previous decisions, can be made using a method based on the step S120.

Then, the flow goes to step S170 where the feeding of the tag tape 101 by the platen roller 50 stops if the determination at step S165 is YES, and the flow goes to step S175.

In step S175, the solenoid is energized by the solenoid driving circuit (not shown), thereby moving the movable blade 51B with respect to the fixed blade 51 A and cutting the tag tape 101 with print at the cutting position CL (refer to FIG. 7A). With this arrangement, the tape front end side is formed into an RFID label T of a predetermined length by the cutting position CL, enabling the operator to feed the RFID label T out from the tag label producing apparatus 1 from the label discharging exit 7 of the apparatus main body 2. As described above, in the aforementioned series of operations, the feed-out of the tag tape 101 from the tag tape roller 36 and the transport (feeding) of the tag tape 101 are performed by the rotation of the platen roller 50. Then, the flow is terminated.

As described above, the RFID label T of the present embodiment comprises the tape base layer 101b, the RFID circuit element To, and the transfer layer 101a on which the characters R are printed in the print area S, forming a layered structure thereof in the thickness direction. With such a layered structure, the section that includes the loop antenna 62 and an IC circuit part 180 comprising the RFID circuit element To tends to readily exhibit protrusions, wrinkles, and the like in the outer appearance of the RFID label T in an amount equivalent to that thickness dimension. Nevertheless, in the embodiment, the print area S of the transfer layer 101a in which the characters R are printed has a positional relationship such that the area is positioned on the inner peripheral side of the antenna pattern 62A in the planar view. That is, print is printed only in the flat area corresponding to the inner peripheral side of the antenna pattern 62A, and not in the area where protrusions, etc., readily occur as described above. With this arrangement, the poor viewability of print caused by light, i.e., shine and reflection, which occurs when print is printed on sections of protrusions, etc., is avoided, thereby making it possible to reliably realize easy-to-view print. As a result, the visual quality of the print is improved, thereby enhancing the aesthetic appearance.

Particularly, in the present embodiment, the outside dimensions (refer to the aforementioned dimensions L2 and W2) of the loop antenna 62 are substantially the same as the outside dimensions (refer to the aforementioned dimensions XL and XW) of the RFID label T. With this arrangement, the loop coil 62 is disposed in a square-frame shape on the outer peripheral area of the square-shaped RFID label T, making it possible to achieve an RFID label with the characters R printed on the inside of that square-frame shape. As a result, the size of the loop antenna 62 is increased so as to improve communication performance, and a large print area S is maintained so as to further improve the viewability of the print.

Additionally, the RFID label T comprises the affixing adhesive layer 101d for affixing the RFID label to the affixing target, and the separation layer 101e that covers the affixing adhesive layer 101d. With this arrangement, the RFID label T can be affixed to the affixing target via the affixing adhesive layer 101d, making it possible to reliably maintain the corresponding relationship with the target object and achieve an effect that enables the RFID label T to be affixed to a curved shaped section or a vertically arranged section of the target object.

Further, particularly in the present embodiment, the tag tape 101 is made into a cartridge so as to be mounted in the tag label producing apparatus 1, thereby making it possible to simplify replacement of the tag tape 101, which is a consumable product. Further, the attributes of the tag tape 101 of each of the cartridges 3 are standardized, thereby making it possible to acquire the attribute information of the corresponding tag tape 101 by simply detecting the type of the cartridge 3 using the cartridge sensor 102.

Furthermore, in the present embodiment, a transfer layer (receptor layer) of the print-receiving layer comprising a transfer receiving material capable of forming print by thermal transfer from the ink ribbon is provided as the print-receiving layer of the tag tape 101. Nevertheless, the present invention is not limited thereto, and a thermosensitive layer comprising a thermosensitive material (printing material) capable of developing color and forming print by heat, or an image receiving layer comprising an image receiving material capable of print formation when ink is applied may be provided as the print receiving layer. In each of these cases as well, similar advantages are achieved.

Note that various modifications may be made according to the present embodiment without departing from the spirit and scope of the invention, in addition to the above. Description will be made below regarding such modifications.

### (1) When an RFID tag of a laminated type is produced

While a case where the present invention is applied to the RFID tag producing apparatus 1 configured to produce an RFID tag T of a so-called non-laminated type that is not bonded to a tag tape has been described in the above embodiment, the present invention is not limited thereto. For example, the present invention may also be applied to an RFID tag producing apparatus that produces an RFID tag TC of a laminated type by using a tape wherein a print receiving tape on which desired print is printed is bonded to a tag tape.

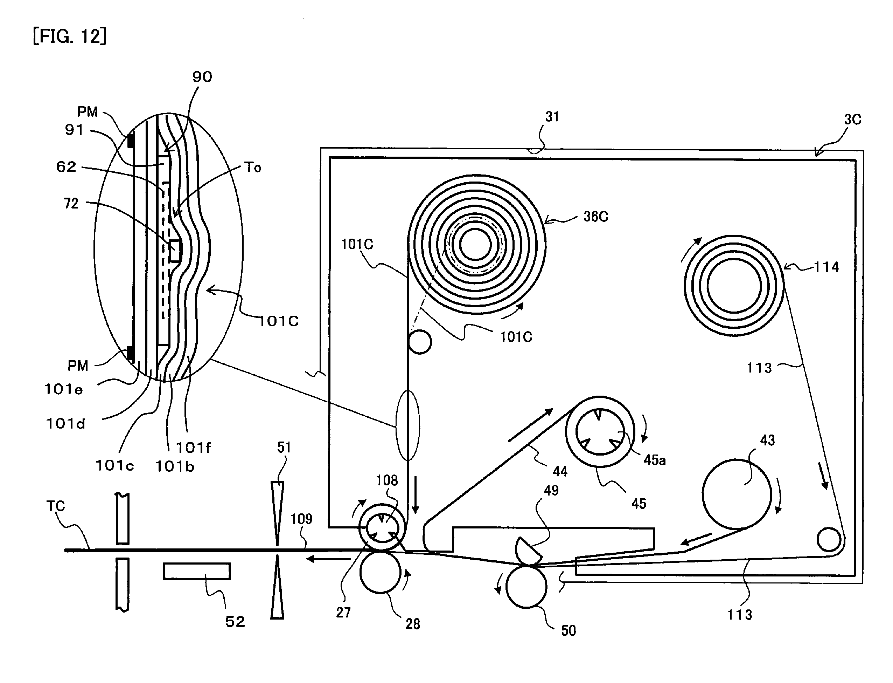

The above modification wherein the RFID tag TC of a laminated type is produced will now be described with reference to FIG. 12. This FIG. 12 corresponds to FIG. 4 of the aforementioned embodiment. Note that components identical to those in the above embodiment are denoted using the same reference numerals, and descriptions thereof will be omitted as appropriate.

As shown in FIG. 12, in the tag label producing apparatus configured to produce the RFID tag TC of the laminated type, a cartridge 3C comprises a cover film roll 114 and a tag tape roll 36C. Printing is performed on a cover film 113 fed out from the cover film roll 114 by the print head 49 using the ink ribbon 44. The front surface of the tag tap base layer 101b of a tag tape 101C (provided with an adhesive layer 101f rather than the transfer layer 101 a) fed out from the tag tape roll 36C is bonded to the cover film 113 after printing, so as to form the tag label tape 109 with print. Then the tag label tape 109 with print is cut so as to produce the RFID label TC. The feeding driving power toward the cover film 113 and the tag tape 101C is provided by a feeding roller 27 driven by a driving shaft 108. The feeding roller 27 along with a sub-roller 28 are respectively provided on opposite sides of the cover film 113 and the tag tape 101C, pressing and bonding the two together. The ink ribbon 44 fed out from the ribbon supply side roll 43 is taken up by the ribbon take-up roller 45 driven by the driving shaft 45a.

The tag tape 101C, in this example, has a five-layer structure (excluding the antenna base 90; refer to the partially enlarged view in FIG. 12), comprising the adhesive layer 101f formed of a suitable adhesive material, the tag tape base layer 101b, the adhesive layer 101c, the adhesive layer 101d, and the separation sheet 101e. The five layers of the tag tape 101C are layered in that order from the side rolled to the inside of the tag tape roll 36 (the right side in FIG. 12) to the side corresponding to the opposite side (the left side in FIG. 12; the affixing side). The cover film 113 on which print is printed as described above is bonded to the tag tape base layer 101b via the adhesive layer 101f.

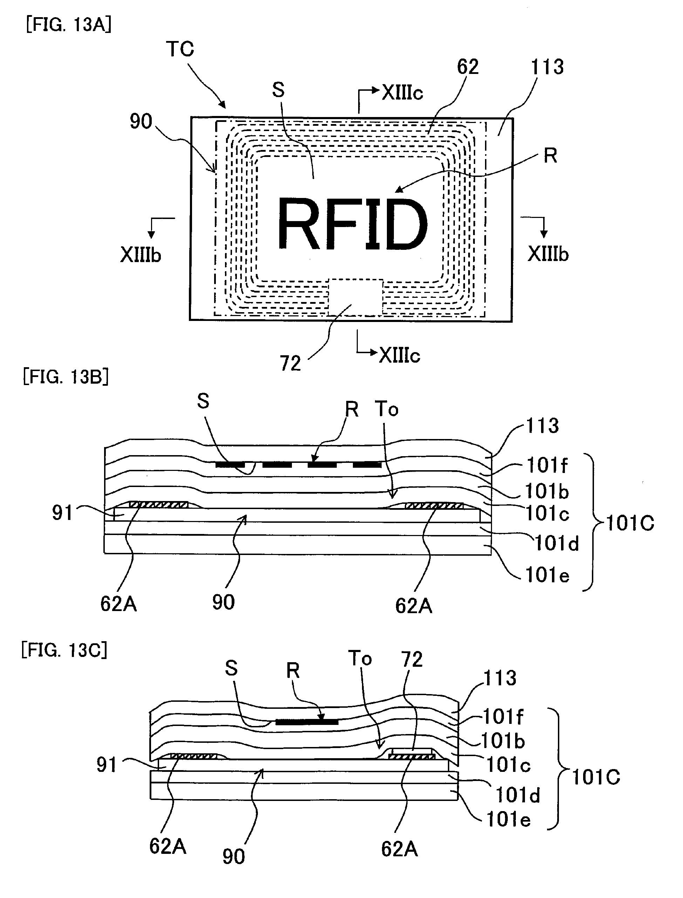

The RFID label TC produced from the tag tape 101C is shown in FIG. 13A to FIG. 13C. As shown in the figures, similar to the aforementioned RFID label T, the section of the RFID label TC that includes the RFID circuit element To protrudes in the thickness direction along the square-frame shaped antenna pattern 62A in the planar view, resulting in a significant bulge in the thickness direction. On the other hand, the section on the inner peripheral side of the antenna pattern 62A forms a flat layered structure without any protrusions on the tag tape base layer 101b, etc.

In this modification, similar to the above embodiment, the design is established so that the print area S of the cover film 113 is positioned on the above-described flat section and, in that section, desired printing is performed.

The present modification also provides similar advantages to those in the foregoing embodiment. In addition, printing is performed on the bonding side of the cover film 113 before the tag tape 101C and the cover film 113 are bonded so that the printed section after bonding is no longer exposed, thereby having the effect of preventing color fading and dirt adhesion on the printed surface.

### (2) Other

While the tag tapes 101 and 101C are stopped at a predetermined position so as to perform the above-described printing, reading, and writing in the above, the present invention is not limited thereto and information may be written to or read from the RFID circuit element To of the tag tape 101, etc., that is in a moving state.

Further, while the above has been described in connection with an illustrative scenario in which the tag tape 101, etc., printed and accessed (subjected to reading/writing) via the RFID circuit element To is cut by the cutter 51 so as to form the RFID label T, the present invention is not limited thereto. That is, the present invention may also be applied to a case where a label mount (a so-called die cut label) separated in advance to a predetermined size corresponding to the label is continuously disposed on the tape fed out from the roller, and the label is not cut by the cutter 51 but rather the label mount (a label mount containing the accessed RFID circuit element To and on which corresponding printing has been performed) only is peeled from the tape after the tape has been discharged from the label discharging exit so as to form the RFID label T or TC.

Furthermore, while the above has been described in connection with an illustrative scenario in which the tag tape 101, etc., is wound around a reel member so as to form a roll, and the roll is disposed in the cartridge 3, etc., so as to feed out the tag tape 101, the present invention is not limited thereto. For example, an arrangement can be made as follows. Namely, a long-length or rectangular tape or sheet (including tape cut to a suitable length after being supplied from a roll) in which at least one RFID circuit element To is disposed is stacked (laid flat and layered into a tray shape, for example) in a predetermined housing part so as to form a cartridge. The cartridge is then mounted to the cartridge holder provided to the tag label producing apparatus side. Then, the tape or sheet is supplied or fed from the housing part, and printing or writing is performed so as to produce that RFID labels T and TC.

Furthermore, a configuration wherein the above-described roll is directly removably loaded to the tag label producing apparatus side, or a configuration wherein a sheet-shaped (long, flat paper-shaped or strip-shaped) medium is moved one piece at a time from outside the tag label producing apparatus by a predetermined feeder mechanism and supplied to within the tag label producing apparatus are also possible. Additionally, the structure of the roll is not limited to a type that is removable from the tag label producing apparatus main body, such as the cartridge 3, but rather the tag tape roll may be provided as a so-called installation type or an integrated type that is not removable from the apparatus main body side. In each of these cases as well, the same effect is achieved.

Further, while the above has been described in connection with an illustrative scenario of the RFID labels T and TC with print that can be affixed as RFID tags to an object to be affixed, the present invention is not limited thereto. That is, the present invention can be applied to a normal card-shaped or sheet-shaped RFID tag that does not comprise an adhesive function. In this case as well, the same effect is achieved.

Additionally, other than those previously described, approaches according to the respective embodiments and exemplary modifications may be utilized in combination as appropriate.

Note that various modifications which are not described in particular can be made according to the present invention without departing from the spirit and scope of the invention.

## Claims

1. An RFID tag (T; TC) comprising:
a base layer (101b) formed into a tape-shape or sheet-shape for disposing an RFID circuit element (To) comprising an IC circuit part (80) configured to store information, and a loop antenna (62) configured to transmit and receive information;
a print-receiving layer (101a; 113) on which print corresponding to information stored in said IC circuit part (80) of said RFID circuit element (To) is printable; and
said print-receiving layer (101a; 113) including a print area (S) printable with a desired print disposed on an inner peripheral side of a loop coil (62A) of said loop antenna (62) in a planar view of said RFID tag (T; TC).

2. The RFID tag (T; TC) according to claim 1, further comprising:
an affixing adhesive layer (101d) for affixing said RFID tag (T; TC) to an object to be affixed; and
a separation layer (101e) for covering said affixing adhesive layer (101d).

3. The RFID tag (T; TC) according to claim 1 or 2, further comprising:
a mounting adhesive layer (101c) for disposing said RFID circuit element (To) on said base layer (101b).

4. The RFID tag (T; TC) according to any one of claims 1 to 3,
wherein said RFID circuit element (To) is disposed so that the outside dimensions (L2, W2) of said loop antenna (62) are substantially the same as the outside dimensions (XL, XW) of said RFID tag (T; TC).

5. An RFID tag producing apparatus (1) for producing the RFID tag (T; TC) according to claim 1, comprising:
feeding means (50b; 108) for feeding a tag medium (101; 101C) in which said RFID circuit element (To) is disposed;
printing means (49) for performing printing on said print-receiving layer (101a; 113) on said tag medium (101) or a print-receiving medium (113) to be bonded to said tag medium (101C); and
an apparatus antenna (52) for transmitting and receiving information via wireless communication with said RFID circuit element (To); and
printing control means (S125, S130, S135, S 140) for controlling said printing means (49) so that the print (R) to be printed by said printing means (49) is positioned on an inner peripheral side of a loop coil (62A) of said loop antenna (62) of said RFID circuit element (To) in a planar view of said RFID tag (T; TC) with print, **characterized in that**
said RFID tag producing apparatus (1) produces said RFID tag (T; TC) with print by using said tag medium (101) with print or a bonding medium (109) formed by bonding said tag medium (101C) and said print-receiving medium (113) with print.

6. The RFID tag producing apparatus (1) according to claim 5, further comprising:
print area determining means (S115) for determining a print area (S) of said print-receiving layer (101a; 113) of said tag medium (101) or said print-receiving medium (113) by said printing means (49), based on attribute information of said tag medium (101; 101C);
**characterized in that**:
said printing control means (S125, S130, S135, S 140) controls said printing means (49) based on said print area (S) determined by said print area determining means (S 115).

7. The RFID tag producing apparatus (1) according to claim 6, further comprising:
attribute information acquisition means (102) for acquiring said attribute information of said tag medium (101; 101C);
wherein said print area determining means (S115) determines said print area (S) based on said attribute information acquired by said attribute information acquisition means (102).

8. The RFID tag producing apparatus (1) according to claim 7, further comprising:
a cartridge holder (31) for mounting and removing a cartridge (3; 3C) that includes a tag tape roll (36; 36C) around which a tag tape (101; 101C) is wound as said tag medium;
wherein said attribute information acquisition means is cartridge detecting means (102) for detecting the type of said cartridge (3; 3C).

9. The RFID tag producing apparatus (1) according to claim 8, further comprising:
cutting means (51) for cutting said tag tape (101; 101 C) so as to create said RFID tag (T; TC),
wherein said cutting means (51) cuts said tag tape (101; 101C) so that the outside dimensions (XL, XW) of said created RFID tag (T; TC) are substantially the same as the outside dimensions (L2, W2) of said loop antenna (62).

10. The RFID tag producing apparatus (1) according to any one of claims 5 to 9,
wherein said feeding means (50b; 108) feeds said tag medium (101; 101C) including an affixing adhesive layer (101d) for affixing said RFID tag (T; TC) to an object to be affixed, and a separation layer (101e) for covering said affixing adhesive layer (101d); and
said RFID tag producing apparatus (1) produces an RFID label (T; TC) with print by using said tag medium (101) with print or said bonded bonding medium (109).

11. The RFID tag producing apparatus (1) according to any of claims 5 to 10,
wherein said printing means (49) performs printing on said print-receiving layer (101a) of said tag medium (101); and
said RFID tag producing apparatus (1) produces an RFID label (T) with print by using said tag medium (101) with print.
